(19) Europäisches Patentamt / European Patent Office / Office européen des brevets

(11) **EP 2 902 192 B1**

(12) **EUROPEAN PATENT SPECIFICATION**

(45) Date of publication and mention
of the grant of the patent:
**11.07.2018 Bulletin 2018/28**

(21) Application number: **13884954.2**

(22) Date of filing: **19.11.2013**

(51) Int Cl.:
*B29K 27/00* (2006.01)     *B29C 43/20* (2006.01)
*B32B 27/08* (2006.01)     *B29L 9/00* (2006.01)

(86) International application number:
**PCT/JP2013/081193**

(87) International publication number:
**WO 2015/075780 (28.05.2015 Gazette 2015/21)**

(54) **MOLDED PRODUCT AND PROCESS FOR PRODUCING SAME**

FORMPRODUKT UND VERFAHREN ZUR HERSTELLUNG DAVON

PRODUIT MOULÉ ET PROCÉDÉ DE PRODUCTION DE CE DERNIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2015 Bulletin 2015/32**

(73) Proprietor: **ASAHI KASEI KABUSHIKI KAISHA**
**Tokyo 101-8101 (JP)**

(72) Inventors:
• **MATSUMURA Tadayoshi**
  **Tokyo 101-8101 (JP)**
• **OKUDA Tohru**
  **Tokyo 101-8101 (JP)**

(74) Representative: **D Young & Co LLP**
**120 Holborn**
**London EC1N 2DY (GB)**

(56) References cited:
**EP-A1- 2 865 522**     **WO-A1-2013/187455**
**JP-A- 2004 074 673**     **JP-A- 2008 162 044**
**JP-A- 2010 070 217**     **JP-A- 2011 051 264**
**JP-A- 2011 212 983**     **JP-A- 2013 180 778**
**JP-U- H0 679 529**     **US-A1- 2006 246 242**

## Description

### Technical Field

The present invention relates to a laminated film for molding into a molded article, wherein the film has a barrier layer which is a polyvinylidene chloride-based resin film, a molded article obtained by molding this film, and a production method thereof.

### Background Art

As a container housing a food or a drug, a molded article having a barrier layer is used. The molded article is produced by molding a laminated film having a barrier layer. The barrier layer serves to prevent the content from contacting with oxygen or water vapor in the air. Various containers having a barrier layer have been developed so far. For example, Patent Literature 1 discloses a multilayer plastic container using a stretched polyvinylidene chloride (PVDC) film. Patent Literature 2 discloses a non-stretched film for laminate consisting of a vinylidene chloride-based resin. Patent Literatures 3 and 4 disclose a heat treatment for improving the moldability of a stretched vinylidene chloride-based film.

### Citation List

### Patent Literature

    Patent Literature 1: Japanese Patent Application Laid-Open (JP-A) No. H3-244537
    Patent Literature 2: JP-A No. S62-285928
    Patent Literature 3: Japanese Patent No. 4889478
    Patent Literature 4: JP-A No. 2011-212983

Japanese Patent Application published as JP 2010 070217A discloses a deep-drawn package which has a sealed bottom material and lid material. The bottom material and/or lid material have/has the straight cutting property of <=20 mm (an absolute valve (M) of a shift amount of a 20 cm tear from a straight line drawn in the vertical direction (MD)).
Japanese Patent Application published as JP 2013 180 778 A discloses a container formed by thermoforming a laminated sheet which includes: a multi-layer film including a homopolypropylene film, a polyvinylidene chloride film, and an adhesive layer which is formed between them; and a heat-resistant polystyrene-based resin foamed sheet which is laminated on a surface on the polyvinylidene chloride film side of the multi-layer film through a polystyrene-based resin layer.
US Patent Application published as US 2006 246 242 A relates to food packaging articles, films and methods comprising a myoglobin blooming agent that promote or preserve the desirable appearance of food products. The food contact layer of the packaging films comprises the myoglobin blooming agent.
European Patent Application published as EP 2 865 522 A1 discloses a laminate with a layered structure including: (A) a base film; (B) a stretched vinyl alcohol resin film; and (c) a fluororesin film.

### Summary of Invention

### Technical Problem

By the way, in order to stably exhibit barrier performance of a molded article, it is desirable that a thickness of a barrier layer occupies a specific ratio or more based on the entire thickness of the molded article. However, in the invention described in Patent Literature 1, a PVDC film stretched to a considerable extent is used as a barrier layer. Therefore, in the molded article prepared from the PVDC film, there is part where the thickness of a barrier layer (PVDC film) is significantly thin. In the first place, since a PVDC film has a nature difficult to be stretched, a conventional laminated film containing a PVDC film has insufficient moldability, and is difficult to be applied to the molding of a container with a deep depth. In an invention described in Patent Literature 2, a non-stretched PVDC film is used. Further in a case where a molded article is prepared from a laminated film containing a non-stretched PVDC film, there is part where the thickness of a barrier layer (PVDC film) is remarkably thin. In addition, a PVDC film of a single layer, in which molecules are not oriented at all, is brittle, and the handling is significantly poor, therefore, there was a room for improvement to stably produce a product by using the film. The inventions described in Patent Literatures 3 and 4 are aimed to improve the moldability of a film by a heat treatment, however, there was a room for improvement to apply to a deep drawing molding, that is, to produce a molded container with a deeper depth.

In a case where a molded article is produced from a laminated film containing a non-stretched film in which molecules are not oriented at all as a barrier layer, since the stress of the non-stretched film is significantly low, unevenness in thickness is generated by molding in the non-stretched film, as a result, significantly thin part of the thickness of the non-stretched film (barrier layer) is easily generated. Accordingly, there is a problem that the barrier performance and strength of the molded article easily become insufficient. On the other hand, in a case where a molded article is produced from a laminated film containing a stretched film in which molecules are excessively oriented by the stretching as a barrier layer, since the stress of the stretched film is significantly high, the moldability is insufficient. Therefore, for example, unevenness in thickness is generated in a stretched film when the stretched film is molded forcibly by using a plug, as a result, extremely thin part of the thickness of the stretched film (barrier layer) is easily generated in a molded article.

The present invention is made in consideration of the actual situation described above, and an object of the present invention is to provide a molded article having some depth and having a sufficiently high barrier property, and a production method thereof.

Solution to Problem

As a result of the intensive investigation to solve the problem described above, the present inventors found that in order to maintain the thickness of a barrier layer at a certain thickness or more after the laminated film containing a barrier layer is processed to a molded article, it is useful to maintain the degree of molecular orientation of a film in an adequate range, and thus have completed the present invention.

The invention is defined by the appended claims.

**Advantageous Effects of Invention**

According to the present invention, a molded article having some depth, and having a sufficiently high barrier property is provided.

**Brief Description of Drawings**

Fig. 1 is a perspective view showing an embodiment of a molded article according to the present invention.
Fig. 2 is a perspective view showing a molded article having a depth different from that of the molded article shown in Fig. 1.
Fig. 3 is a perspective view showing another embodiment of a molded article according to the present invention.
Fig. 4 is a perspective view showing another embodiment of a molded article according to the present invention.

**Description of Embodiments**

Hereinafter, embodiments of the present invention will be explained in detail. The following embodiments are examples explaining the present invention, and it is not intended to limit the present invention to the following contents.

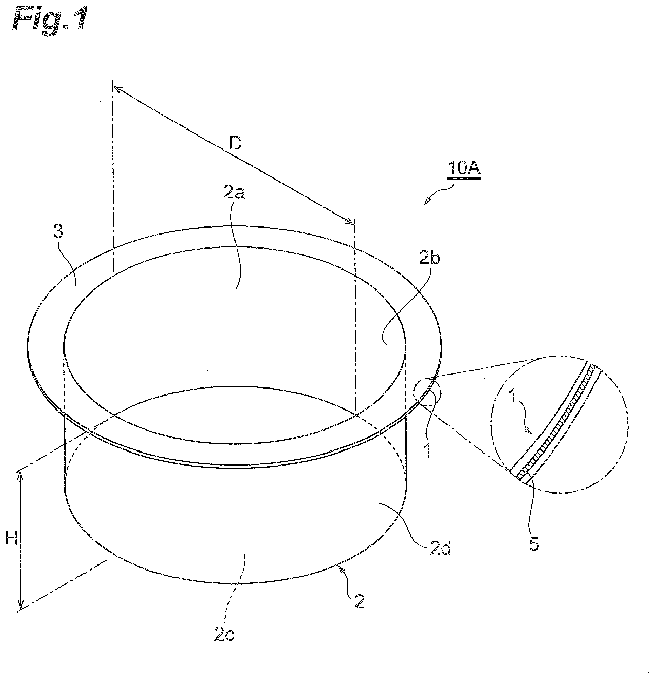

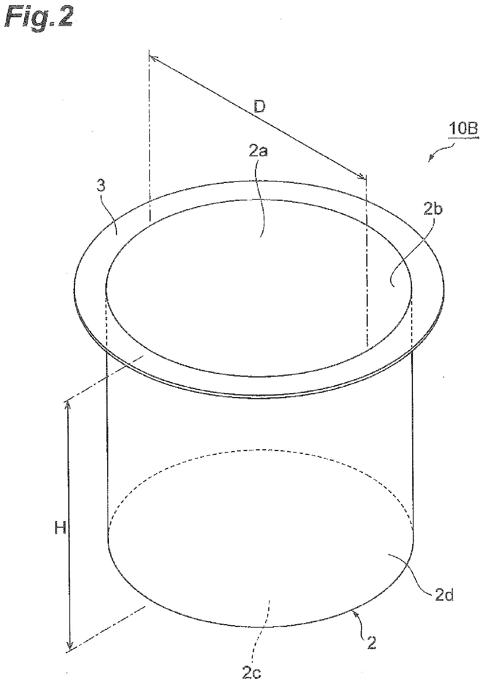

<Molded article> Figs. 1 and 2 are perspective views showing a molded article according to an embodiment. Molded articles 10A and 10B are obtained by molding a laminated film 1 having a barrier layer 5, and are for housing a food, a drug, or other products that should avoid the contact with oxygen or water vapor. As shown in Figs. 1 and 2, molded articles 10A and 10B are provided with a housing portion 2 constituting a space for housing a content, and a flange portion 3 to which a lid (not illustrated) is bonded. The housing portion 2 has an opening 2a with an opening area A; and an inner surface 2b with a surface area B. A flange portion 3 is formed on the outside of the opening 2a.

In a molded article, a ratio B/A of the surface area B of the inner surface 2b to the opening area A of the opening 2a is 1.2 or more to 7 or less. A ratio B/A of the surface area B to the opening area A of the molded article is a measure of the elongation at the time of molding of a laminated film 1. In addition, the surface area B of the inner surface 2b referred to herein means only the area of the part constituting a space for housing a content (housing portion) without containing the area of the flange portion 3 of the molded article. For example, in a case where the molded article is a cylindrical shape having a bottom 2c, and the ratio H/D of the depth H to the diameter D of the opening 2a is 0.5 (see Fig. 1), the ratio B/A of the surface area B to the opening area A is 3, in a case where the H/D is 1.0 (see Fig. 2), the B/A is 5, and in a case where the H/D is 1.5, the B/A is 7. A molded article having a value of B/A of 3.6 or more to 7 or less is enough to be classified as a deep-drawn molded article.

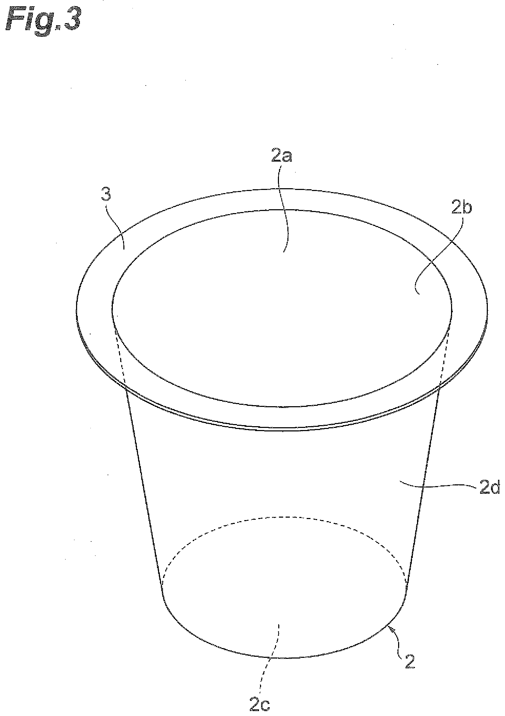

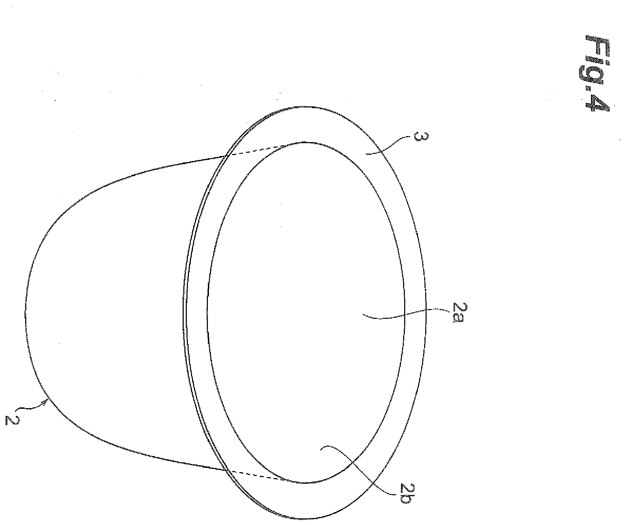

Further, the shape of the housing portion 2 of the molded article is not limited to the above. For example, as shown in Fig. 3, the side 2d may be a tapered shape such that the opening area is expanded toward the opening 2a from the bottom 2c. In addition, the housing portion 2 is not necessarily constituted with a bottom 2c and a side 2d, as shown in Fig. 4, the entire housing portion 2 may be a rounded shape.

In a case where the maximum thickness of a molded article (including a flange portion 3) is 300 $\mu$m or more, the ratio $T_{MIN}/T_{MAX}$ of the minimum thickness $T_{MIN}$ to the maximum thickness $T_{MAX}$ of a barrier layer 5 is 0.2 or more to 0.5 or less. In a case where the maximum thickness of a molded article is 300 $\mu$m or more, a laminated film to be used for the production of a molded article is also called a "rigid sheet", and has high stress at the time of sheet molding. As the molding method, a vacuum method or air-pressure method of molding by only the pressure of the air, or both of the methods are insufficient, therefore, a plug-assist method, or a match mold method in which a pair of male and female metal molds are used, is employed. These techniques have a feature that since the molding is performed by pressing a sheet with a physically strong force, the molding pressure is sufficiently uniform, and thin part is hardly made at the time of the molding.

In a case where the maximum thickness of a molded article (including a flange portion 3) is less than 300 $\mu$m, the ratio $T_{MIN}/T_{MAX}$ of the minimum thickness $T_{MIN}$ to the maximum thickness $T_{MAX}$ of a barrier layer 5 is 0.12 or more to 0.5 or less. In a case where the maximum thickness of a molded article is less than 300 $\mu$m, a laminated film to be used for the production of the molded article is generally called a "flexible film", and has relatively low stress at the time of film molding. Therefore, as the molding method, a vacuum method or air-pressure method of molding by only the pressure of the air, or both of the methods are employed. In this case, it is impossible to uniformly apply the air pressure throughout the film at the time of molding, there is a feature that extremely thin part is more easily made at the time of molding as compared with a plug-assist method or a match mold method.

For these reasons, the ratio of a barrier layer after the molding of a molded article having a maximum thickness of 300 $\mu$m or more is higher than that in a case of less than 300 $\mu$m. Conventionally, in a molded article having a housing portion with a certain depth, in a case where the maximum thickness of the film constituting the molded article is 300 $\mu$m or more, a molded article having a value of the ratio $T_{MIN}/T_{MAX}$ of the minimum thickness $T_{MIN}$ to the maximum thickness $T_{MAX}$ of the barrier layer of 0.2 or more cannot be present, and further in a case where the maximum thickness of the film constituting the molded article is less than 300 $\mu$m, a molded article having a value of the ratio $T_{MIN}/T_{MAX}$ of 0.12 or more could not be present.

One of the examples of the vacuum pressure molding machine for producing a molded article having a maximum thickness of less than 300 $\mu$m includes a molding and filling machine (a FFS machine). One example of the molding method using a FFS machine will be explained. Firstly, a film for molding is fed out, then heated by a heat plate, the heated film is molded into a predetermined shape by a vacuum pressure, and then to which a content is filled. On the other hand, a fed film for a lid is top sealed with a film for molding to which a content is filled. Thereafter, the top-sealed film is continuously slitten, and forms each final package. The molded container of the present embodiment is excellent in the gas barrier property, the moldability, and the impact strength, therefore, is suitable as a container for a food, an industrial product, and a drug.

<Barrier layer>

A molded article of the present embodiment has a barrier layer 5 that prevents penetration of oxygen. The oxygen barrier performance of the molded article can be evaluated with the oxygen transmission rate (OTR) calculated by the following equation. The value of the oxygen transmission rate is preferably 2 to 500 ml/m$^2$·day·MPa, and more preferably 2 to 100 ml/m$^2$·day·MPa. If the oxygen barrier performance is 2 ml/m$^2$·day·MPa or more, the processability at the time of film forming is favorable. On the other hand, if the oxygen transmission rate is 500 ml/m$^2$·day·MPa or less, the oxygen barrier performance is sufficient, and the content can be sufficiently protected.

$$\text{OTR} = (\text{oxygen barrier per container} / \text{surface area of container})$$
$$/ (\text{surface area of container} / \text{opening area of container})$$

The barrier layer is a polyvinylidene chloride-based resin layer.

The barrier layer is prepared by using a polyvinylidene chloride-based resin composition containing a polyvinylidene chloride-based resin. The polyvinylidene chloride-based resin may be a homopolymer of a vinylidene chloride monomer, or may be a copolymer with a monomer copolymerizable with a vinylidene chloride monomer. The monomer copolymerizable with a vinylidene chloride monomer is not particularly limited, and examples of the monomer include an acrylate such as methyl acrylate, and butyl acrylate; a methacrylate such as methyl methacrylate, and butyl methacrylate; vinyl chloride; acrylonitrile; and vinyl acetate. Among these, methyl acrylate is preferable from the viewpoint of the balance between the gas barrier property and the extrusion processability in a film. These copolymerizable monomers may be used singly, or may be used in combination with two or more kinds. Further, the polyvinylidene chloride-based resin composition may be a composition containing one kind of polyvinylidene chloride-based resin, or may be a composition containing two or more kinds of polyvinylidene chloride-based resins.

Examples of the polyvinylidene chloride-based resin composition include a copolymer consisting of a vinylidene chloride monomer and a vinyl chloride monomer, and a copolymer consisting of a vinylidene chloride monomer and a methyl acrylate monomer. Among these, it is preferable to contain a copolymer consisting of a vinylidene chloride monomer and a methyl acrylate monomer. In this case, a copolymer consisting of 90 to 98% by mass of vinylidene chloride and 10 to 2% by mass of methyl acrylate is more preferable. If the content of the methyl acrylate is 2% by mass or more, the melting characteristics at the time of extrusion film forming are more favorable. Further, if the content of the methyl acrylate is 10% by mass or less, the gas barrier performance can be generated more highly.

In a case where the copolymer consisting of a vinylidene chloride monomer and a methyl acrylate monomer is contained as the polyvinylidene chloride-based resin composition, the weight average molecular weight (Mw) of the copolymer is preferably 60000 to 130000. If the Mw is 60000 or more, the strength capable of withstanding the stretching at the time of film forming is further improved, and if the Mw is 130000 or less, the melt extrusion can be more efficiently performed. The "weight average molecular weight" referred to herein means a value determined by a gel permeation chromatography method (GPC method) using polystyrene as the standard.

In addition, also in a case of a vinylidene chloride-vinyl chloride copolymer, the weight average molecular weight (Mw) of the copolymer is preferably 60000 to 130000. If the Mw is 60000 or more, the strength capable of sufficiently withstanding the stretching at the time of film forming is provided, and if the Mw is 130000 or less, the melt extrusion can be more efficiently performed.

In the polyvinylidene chloride-based resin composition, an additive such as a plasticizer, and a thermal stabilizer can be formulated. The plasticizer is not particularly limited, a known plasticizer can be used, and examples of the plasticizer include acetyl tributyl citrate, acetylated monoglyceride, and dibutyl sebacate. The thermal stabilizer is not particularly limited, a known thermal stabilizer can be used, and examples of the thermal stabilizer include epoxidized vegetable oil such as epoxidized soybean oil, and epoxidized linseed oil, and an epoxy-based resin. In addition, as long as the effects of the present embodiment are sufficiently exerted, an additive such as a known colorant, an organic lubricant, an inorganic lubricant, and a surfactant may be added.

In the polyvinylidene chloride-based film, the degree of molecular orientation is preferably adjusted. By the addition of a specific heat treatment to a stretched film, the degree of molecular orientation can be adjusted. For example, after the stretching by a tenter method or a double bubble, a heat treatment can be performed with the resin warm of a PE resin by an extrusion laminating method.

A barrier layer in a laminated film before molding (hereinafter, referred to as a "barrier film") satisfies the following conditions. That is, both of the shrinkage rates in the machine direction (MD) and in the transverse direction (TD) at 120°C in a barrier film are 1% or more to 25% or less, preferably 1% or more to 5% or less. The "machine direction (MD)" referred to herein means the longitudinal direction that is the extrusion direction of the film, and the "transverse direction (TD)" referred to herein means the lateral direction perpendicular to the extrusion direction of the film. In addition, the shrinkage rate referred to herein means a value measured under the conditions at a temperature of 120°C in the air atmosphere for a processing time of 5 minutes. The shrinkage rate at 120°C that is in the vicinity of the molding temperature is 1% or more, which means that some molecule orientation is generated in the film, therefore, adequate stress is applied at the time of molding, and the molded article can be sufficiently prevented from generating extremely thin part. On the other hand, if the shrinkage rate is 25% or less, a molded article with a deep depth can be produced from a laminated film (that is, capable of deep drawing molding), and if the shrinkage rate is 5% or less, a molded article with a deeper depth can be produced. In order to adjust the heat shrinkages in the MD and TD to 1% or more to 25% or less, the stretch ratio is adjusted to 2 to 6 times in both of the MD and TD at the time of film-forming a film that constitutes the barrier layer.

With a polyvinylidene chloride-based film as a barrier film, both of the dichroic ratios of the machine direction (MD) and the transverse direction (TD) by an IR evaluation in the film cross section are 1.2 to 1.8, preferably 1.2 to 1.5. The dichroic ratio is an indicator of the degree of molecular orientation. If the dichroic ratio is 1.2 or more, the molecule orientation is adequately generated, therefore, unevenness in thickness is hardly generated, and extremely thin part is hardly generated in a molded article. On the other hand, if the dichroic ratio is 1.8 or less, the degree of molecular orientation is not excessively large, therefore, a molded article with a sufficiently deep depth can be produced.

The barrier film can be produced, for example, by a conventionally known extrusion film forming method. One example is shown in the following. At first, a resin is supplied to an extruder, and the supplied resin composition is heated and kneaded while being propelled by a screw of the extruder and melted. After that, the resin is extruded from a slit portion of an annular die or a T-die, which is attached to the tip of the extruder. A film formed by this is stretched.

The thickness of the barrier film is 10 to 100 $\mu$m, preferably 8 to 50 $\mu$m. If the thickness of the barrier layer is

8 μm or more, even if the barrier layer becomes thin by molding, sufficient barrier performance can be maintained. On the other hand, if the thickness of the barrier layer is 100 μm or less, excellent extrusion productivity can be achieved in the film forming, and if the thickness of the barrier layer is 50 μm or less, more excellent extrusion productivity can be achieved.

<Heat treatment for barrier film>

A heat treatment method for adjusting the degree of molecular orientation of a barrier film will be explained. By the adjustment of the degree of molecular orientation, the heat shrinkage of the barrier film can be adjusted. The heat treatment method is provided with a step in which a film is heated to a temperature near the melting point of the resin constituting the barrier film or a temperature of the meltingpoint or more, as a result, the barrier film is shrunk by a certain amount.

That is, this method is provided with a step in which when the melting point of the resin is Tm (°C), a barrier film is heated by a heat medium having a temperature of (Tm-30)°C or more, as a result, the barrier film is shrunk by 5 to 15% in the width direction. If the shrinkage rate of the barrier film is 5% or more, the molecular orientation in the barrier film is adequately relaxed, and the moldability of the film is improved, on the other hand, if the shrinkage rate is 15% or less, the wrinkles are hardly generated in the film at the time of heat treatment.

Specific examples of the heat treatment method include a direct heating with a roll, an indirect heating with an IR heater and the like, and a heat treatment with resin warm at the time of extrusion lamination. Immediately after the heat treatment, the polyvinylidene chloride-based resin film is instantaneously cooled down with a nip roll having a temperature of 30°C or less, preferably 10 to 30°C, such that a barrier film is not melted, or wrinkles are not generated in the film even if the barrier film is subjected to a heat treatment at a high temperature of (Tm-30)°C or more. If the temperature of the nip roll is 30°C or less, a film can be instantaneously cooled down, and the fracture of the film by melting, or the surface roughness can be sufficiently suppressed. If the temperature of the nip roll is 10°C or more, the roll hardly causes dew condensation, and the surface roughness of the film, which is caused by water droplets, can be sufficiently suppressed.

As described above, a heat treatment with resin warm at the time of extrusion lamination can be performed for the barrier film. As the extrusion resin, a known polyolefin-based resin or a polyethylene terephthalate resin can be used. Examples of the polyolefin-based resin include, for example, a low-density polyethylene resin; a medium-density polyethylene resin; a high-density polyethylene resin; a polypropylene resin; a copolymer resin of one kind or two or more kinds of an α-olefin such as propylene, 1-butene, 1-pentene, 1-hexene, 1-heptene, and 1-octene, with ethylene; a copolymer resin of a (meth)acrylic acid-based resin such as acrylic acid, and methacrylic acid, with ethylene; a copolymer resin of vinyl acetate with ethylene; a copolymer resin of a (meth)acrylic acid ester-based resin such as ethyl acrylate, methyl acrylate, n-propyl acrylate, isopropyl acrylate, methyl methacrylate, ethyl methacrylate, n-propyl methacrylate, and isopropyl methacrylate, with ethylene; or a graft (ternary) copolymer resin of these resins with unsaturated carboxylic acids such as maleic anhydride; and further an ionomer resin. The resins described above may be used alone or in combination with two or more kinds.

In addition, into a polyolefin-based resin used for an extrusion laminated layer, one kind or two or more kinds of a known additive such as an antioxidant, a light stabilizer, an ultraviolet absorbent, an anti-blocking agent, a neutralizing agent, a flame retardant, an antistatic agent, an anti-fogging agent, a lubricant, a pigment, and a filling material may be added within the range of not inhibiting the effects of the present embodiment.

The MFR (melt flow rate: JIS-K7210) of the polyolefin-based resin used for an extrusion laminated layer is preferably in the range of 1 to 50 g/10 min., and more preferably in the range of 3 to 20 g/10 min. If the MFR is 1 g/10 min. or more, the spreadability of the resin is sufficient, and a favorable laminated film can be formed; and if the MFR is within 50 g/10 min., the neck-in is small at the time of being extruded from an extruder, and the film moldability is favorable.

The extruder for melt-extruding a polyolefin-based resin or a polyethylene terephthalate-based resin into a thin film state is not particularly limited, and a common extruder for molding a resin sheet can be used. The melt-extruded resin is arranged on at least one side of a barrier film, as a result, an extrusion laminated layer is obtained. The temperature of the resin warm of extrusion laminated layer (temperature of a heat medium), for which an appropriate temperature is selected depending on the used resin, is preferably in the range of (Tm-30)°C to 340°C, and more preferably in the range of 200 to 340°C. If the extrusion temperature is (Tm-30)°C or more, the molecular orientation of the barrier film is relaxed by a heat of the melted resin, as a result, the elongation of a laminated film is improved, and as a result, a laminated film having a barrier property can be obtained depending on the various applications. If the extrusion temperature is 340°C or less, the shrinkage of the barrier film by a heat treatment is small, therefore, the productivity is excellent.

The thickness of the extrusion laminated layer is preferably 15 μm or more to 50 μm or less, and more preferably 20 μm or more to 50 μm or less. If the thickness of the extrusion laminated layer is 15 μm or more, a sufficient heating value is provided at the time of contacting with the barrier film, therefore, the molecular orientation of the barrier film is relaxed by a heat, as a result, the elongation of a laminated film is improved. On the other hand, if the thickness is 50 μm or less, the productivity of the extrusion lamination is excellent. The thickness of the extrusion laminated layer can be controlled by the adjustment of the extruding amount at the time of the melt extrusion.

Using the extrusion laminated layer as a medium layer, extrusion sand lamination of the barrier film and the other films can be performed. In this case, in order to increase the adhesive strength between each film and the extruded polyolefin resin layer, an adhesion promoter (hereinafter, referred to as an "anchor coat") is preferably coated onto the barrier film and the other films, respectively in advance. As the anchor coat, an organotitanium-based agent, a polyurethane-based agent, a polyethyleneimine-based agent, and a polybutadiene-based agent are preferable. Further, when a corona treatment is performed before the coating of the anchor coat, the adhesive strength is increased and thus preferable.

As described above, by performing a direct heating treatment with a heat roller, or by performing an indirect heating treatment with an IR heater, the barrier film may be subjected to a heat treatment. For example, in a case where the direct heating treatment is performed with a heat roller, the temperature of the roller may be adjusted in the range of (Tm-30)°C to 340°C from the same reason as that in the temperature conditions of the heat treatment by extrusion lamination.

<Laminated film>

The laminate structure of a laminated film containing a barrier film is not particularly limited, and may be either a symmetrical structure or an asymmetric structure. In addition, a laminated body with a multilayer structure composed of three layers, four layers, or more layers can be made. The thickness of the laminated body is preferably 50 μm to 3000 μm.

The production method of the laminated body film is provided with a step of bonding the barrier film to the other film. Specific examples of the production method include a co-extrusion method, an extrusion laminating method, a dry laminating method, and a thermal laminating method. Hereinafter, one example of each method will be shown as the Example.

**Examples**

Hereinafter, the present invention will further be specifically explained by way of Examples and Comparative Examples, however, the present invention should not be limited at all by these.

1. Maximum thickness of molded article

Multiple parts of a molded article including a flange portion were measured with a dial gauge, and the maximum value of the obtained measured values was used as the "maximum thickness of a molded article".

2. Opening area and surface area of molded article

Opening area A of a molded article and surface area B of a molded article (excluding the flange portion) were determined based on the dimensions of a mold to be used for the molding.

3. Oxygen transmission rate

An aluminum lid was bonded to a molded article using an epoxy-based adhesive, and then the oxygen transmission rate of the container was measured in accordance with ASTM D-3985. The measurement was performed in the atmosphere of 23°C and 65% RH by using an oxygen transmission rate measuring apparatus "Mocon OX-TRAN 2/20". Eventually, the oxygen transmission rate was determined from the measured values by using the following equation. (Unit: $ml/m^2 \cdot day \cdot MPa$)

$$OTR = (oxygen\ barrier\ per\ container\ /\ surface\ area\ of\ container)\ /\ (surface\ area\ of\ container\ /\ opening\ area\ of\ container)$$

4. Minimum thickness $T_{MIN}$ and maximum thickness $T_{MAX}$ of barrier layer

The thinnest part and thickest part of the thickness in a molded article were grasped by the measurement with a dial gauge, and the parts were cut out. The cross-sections of the cut-out parts were enlarged by a microscope, and the thickness of the barrier layer was measured. These values of the thickness were defined as minimum thickness $T_{MIN}$ and maximum thickness $T_{MAX}$ of the barrier layer.

5. Heat shrinkage of barrier layer

The barrier layer was exposed to the air atmosphere at a temperature of 120°C over 5 minutes, and thus was heated. The sizes of the barrier layers before and after the heating were measured, and the heat shrinkage was calculated from the measured values.

6. IR dichroic ratio of barrier layer

The IR dichroic ratio was measured on the surface of the barrier layer in the laminated film cross section, or at the position of 8 $\mu$m from the interface with the other layer. As the measuring apparatus, an IR apparatus, FT-IR4100 and a microscope, IRT-5000, which are manufactured by JASCO Corporation, were used. By using these apparatuses, an aperture size, and IR spectra in the thickness direction (TH) and the surface direction (MD or TD) were measured. Each absorbance in 1045 cm$^{-1}$ was used as $A_{TH}$, and $A_{MD/TD}$, respectively, and IR dichroic ratio $R = A_{TH}/A_{MD \text{ or } TD}$ was determined.

Hereinafter, the preparation of a laminated film in Examples and Comparative Examples will be explained. In addition, as to the layer constitution of the laminated film, the symbol "//" between constituent elements means that the constituent elements described in both sides of the symbol "//" were laminated by a dry lamination method. Further, the symbol "/" between constituent elements means that the constituent elements described in both sides of the symbol "/" were laminated by an extrusion laminating method. Furthermore, the numerical value in parentheses represents the thickness of each constituent element.

[Example 1]

As a barrier film, a PVDC film with a thickness of 25 $\mu$m (Saran UB-M1141 manufactured by Asahi Kasei Chemicals Corporation) was used. The composition of the PVDC is a copolymer of vinylidene chloride with methyl acrylate, and the melting point measured with a differential scanning calorimetry (DSC) was 165°C. In addition, the melting point referred to herein means a value measured by using Diamond DSC manufactured by PerkinElmer under the conditions from 5°C to 190°C at a temperature rise rate of 10°C/mm. The PVDC film was subjected to a heat treatment with a mirror surface roll heated to 140°C, and immediately after that, the PVDC film was subjected to a cooling treatment with a mirror surface roll at 10°C. It was confirmed that the width of the PVDC film was shrunk by 8% by the heat treatment. In the PVDC film, the heat shrinkage (average in the MD and TD) was 10%, and the dichroic ratio (average in the MD and TD) was 1.7.

As the base material bonding to a PVDC film, a non-stretched polypropylene-based resin film with a thickness of 20 $\mu$m (hereinafter, referred to as a "CPP film". SUNTOX CP-KT manufactured by SunTox Co., Ltd.), and a PP sheet with a thickness of 280 $\mu$m (P2127 manufactured by SEKISUI SEIKEI Co., Ltd.) were used. These were dry-laminated to prepare a laminated film of CPP (20 $\mu$m) // PVDC (25 $\mu$m) // CPP (20 $\mu$m) // PP (280 $\mu$m). An adhesive obtained by dissolving an urethane-based adhesive (a mixture of 10 : 1 of TAKELAC A515 / A50 manufactured by MITSUI TAKEDA CHEMICALS, INC.) with ethyl acetate (urethane-based resin : ethyl acetate = 1 : 3) was used as the adhesive for dry laminate, and the adhesive was coated such that the coating amount was 4 g/m$^2$ in the dry state. The obtained laminated film was molded by a plug-assist method using a continuous molding machine (CLS-531) manufactured by Asano Laboratories Co., Ltd. The molding temperature was adjusted such that the surface temperature of the film was 120°C. A cylindrical metal mold with a frontage diameter of 100 mm, a bottom diameter of 100 mm, a depth of 50 mm, and no R corner was used.

In the present Example, the ratio B/A of the surface area B of the inner surface to the opening area A of the opening was 3. The maximum thickness of the molded article was 360 $\mu$m.

[Example 2]

A laminated film was prepared in the same manner as in Example 1 except for the following matters.

- As a barrier film, a PVDC film with a thickness of 15 $\mu$m. (Saran UB-M1141 manufactured by Asahi Kasei Chemicals Corporation) was used instead of using the PVDC film with a thickness of 25 $\mu$m.
- The temperature of the heated mirror surface roll was changed from 140°C to 145°C.

It was confirmed that the width of the PVDC film was shrunk by 9% by the heat treatment. The heat shrinkage (average in the MD and TD) of the PVDC film was 5%, and the dichroic ratio (average in the MD and TD) was 1.4.

A molded article was obtained from the laminated film in the same manner as in Example 1 except for the following matters.

- A cylindrical metal mold with a frontage diameter of 100 mm, a bottom diameter of 100 mm, a depth of 100 mm, and no R corner was used.

In the present Example, the ratio B/A of the surface area B of the inner surface to the opening area A of the opening was 5. The maximum thickness of the molded article was 350 $\mu$m.

[Example 3]

A PVDC film was prepared in the same manner as in Example 1 except for the following matters.

- The temperature of the heated mirror surface roll was changed from 140°C to 150°C.

It was confirmed that the width of the film was shrunk by 10% by the heat treatment. The heat shrinkage (average in the MD and TD) of the PVDC film was 3%, and the dichroic ratio (average in the MD and TD) was 1.3.

As the base materials for laminate, a CPP film, a non-stretched polystyrene-based resin film with a thickness of 20 $\mu$m (hereinafter, referred to as a "CPS film", manufactured by Ohishi Sangyo Co., Ltd.), and a polystyrene-based resin sheet with a thickness of 2,300 $\mu$m (hereinafter, referred to as "PSP". H390 manufactured by Sekisui Plastics Co., Ltd.) were used, and a laminated film of CPP (20 $\mu$m) // PVDC (15 $\mu$m) // CPS (20 $\mu$m) // PSP (2,300 $\mu$m) was obtained.

A molded article was obtained from the laminated film in the same manner as in Example 1 except for the following matters.

- A cylindrical metal mold with a frontage diameter of 100 mm, a bottom diameter of 100 mm, a depth of 150 mm, and no R corner was used.

In the present Example, the ratio B/A of the surface area B of the inner surface to the opening area A of the opening was 7. The maximum thickness of the molded article was 2,370 $\mu$m.

[Example 4]

The same barrier film (PVDC film with a thickness of 25 $\mu$m) as that in Example 1 was prepared. A heat treatment by an extrusion laminating method was performed instead of performing the heat treatment with a heated mirror surface roll. That is, as the PE resin for extrusion lamination, SUNTEC LD1850-K manufactured by Asahi Kasei Chemicals Corporation was used. In order to be able to evaluate the heat shrinkage of the PVDC single layer film by peeling off the PE resin layer that had been laminated, the extrusion lamination was performed without the coating of an anchor coat to the PVDC film. Although the evaluation test can be performed since the adequate adhesive strength was ensured even if the anchor coat had not been coated, it is desirable to use an anchor coat at the time of the production.

The resin temperature of PE was 330°C at the time of extrusion lamination. Almost at the same time that the extrusion resin was brought into contact with the PVDC film, the laminated film was brought into contact with the pinch rolls cooled to 15°C. It was confirmed that the width of the PVDC film was shrunk by 10% by the heat treatment of extrusion resin. The heat shrinkage (average in the MD and TD) of the PVDC film was 3%, and the dichroic ratio (average in the MD and TD) was 1.2. In addition, the PE layers were bonded onto both sides of the PVDC film by extrusion lamination, then the bonded PE layers were peeled off, and the heat shrinkage of the PVDC single layer film was measured.

The laminated film prepared by a extrusion laminating method (PE / PVDC / PE) and the same PP sheet as that used in Example 1 were dry-laminated, as a result, a laminated film of PE (30 $\mu$m) / PVDC (25 $\mu$m) / PE (30 $\mu$m) // PP (280 $\mu$m) was obtained. The laminated film was molded by a cylindrical metal mold with a frontage diameter of 100 mm, a bottom diameter of 100 mm, a depth of 150 mm, and no R corner, in the same manner as in Example 3.

In the present Example, the ratio B/A of the surface area B of the inner surface to the opening area A of the opening was 7. The maximum thickness of the molded article was 380 $\mu$m.

[Example 5]

A laminated film was prepared in the same manner as in Example 1 except for the following matters.

- As a barrier film, a Saran film 883 with a thickness of 20 μm, manufactured by Asahi Kasei Chemicals Corporation was used instead of using the PVDC film with a thickness of 25 μm (Saran UB-M1141 manufactured by Asahi Kasei Chemicals Corporation). The resin constituting the barrier film was a copolymer of vinylidene chloride with vinyl chloride.

It was confirmed that the width of the barrier film was shrunk by 8% by the heat treatment under the same conditions as in those in Example 1. In the PVDC film, the heat shrinkage (average in the MD and TD) was 13%, and the dichroic ratio (average in the MD and TD) was 1.7.

By using the same base material (a CPP film) as that in Example 1, a laminated film of CPP (20 μm) // PVDC (20 μm) // CPP (20 μm) // PP (280 μm) was obtained.

A molded article was obtained from the laminated film in the same manner as in Example 1 except for the following matters.

- A cylindrical metal mold with a frontage diameter of 100 mm, a bottom diameter of 100 mm, a depth of 75 mm, and no R corner was used.

In the present Example, the ratio B/A of the surface area B of the inner surface to the opening area A of the opening was 4. The maximum thickness of the molded article was 355 μm.

[Comparative Example 1]

With reference to Examples of JP-A No. H3-244537, as a barrier film (PVDC layer), Saran UB (thickness of 25μm) in the process at the time was used. The Saran UB at the time had not been adjusted the orientation, and the heat shrinkage (average in the MD and TD) of the PVDC film was 26%, and the dichroic ratio (average in the MD and TD) was 2.2.

As the base materials bonding to the barrier film, a biaxially stretched polyethylene terephthalate-based resin film with a thickness of 16 μm (hereinafter, referred to as a "PET film". LUMIRROR manufactured by Toray Industries, Inc.), and a PP sheet with a thickness of 280 μm (P2127 manufactured by SEKISUI SEIKEI Co., Ltd.) were used. These were dry-laminated to prepare a laminated film of PET (16 μm) // PVDC (25 μm) // CPP (20 μm) // PP (920 μm).

A molded article was obtained from the laminated film in the same manner as in Example 1 except for the following matters.

- A cylindrical metal mold with a frontage diameter of 100 mm, a bottom diameter of 100 mm, a depth of 60 mm, and no R corner was used.

In the present Example, the ratio B/A of the surface area B of the inner surface to the opening area A of the opening was 3.4. The maximum thickness of the molded article was 1000 μm.

[Comparative Example 2]

The same laminated film as that in Comparative Example 1 was prepared. A molded article was obtained from the laminated film in the same manner as in Comparative Example 1 except for the following matters.

- A cylindrical metal mold with a frontage diameter of 100 mm, a bottom diameter of 100 mm, a depth of 100 mm, and no R corner was used.

The barrier film did not follow at the time of molding, and the barrier layer after the molding was cracked. In the present Example, the ratio B/A of the surface area B of the inner surface to the opening area A of the opening was 5. The maximum thickness of the molded article was 1000 μm.

[Example 6]

A laminated film was prepared in the same manner as in Comparative Example 1 except that the same barrier film as that in Example 4 (PVDC film in which PE had been peeled off after the heat treatment of extrusion lamination) was used. A molded article was obtained from the laminated film by using the same metal mold as that in Example 1.

In the present Example, the ratio B/A of the surface area B of the inner surface to the opening area A of the opening was 5. The maximum thickness of the molded article was 1000 μm.

[Example 7]

The same barrier film as that in Example 1 was subjected to a heat treatment under the same conditions as in those in Example 1. As the base materials bonding to the barrier film, a CPP film with a thickness of 50 $\mu$m (SUNTOX CP-KT manufactured by SunTox Co., Ltd.), a non-stretched nylon-based resin film with a thickness of 30 $\mu$m. (hereinafter, referred to as "CNy". Rey Juan 1401 manufactured by Toray Advanced Film Co., Ltd.), and a PP sheet with a thickness of 280 $\mu$m (P2127 manufactured by SEKISUI SEIKEI Co., Ltd.) were used. These were dry-laminated in the same manner as in Example 1 to prepare a laminated film of CPP (50 $\mu$m) // PVDC (25 $\mu$m) // CNy (30 $\mu$m) // CPP (50 $\mu$m).

The laminated film was subjected to a pressure molding. In the pressure molding, a FFS machine (MULTIVAC R105 type) was used. The molding temperature was adjusted such that the surface temperature of the film was 120°C, and further a rectangular pallalelepiped metal mold with a frontage of 50 mm × 100 mm, a bottom of 50 mm × 100 mm, a depth of 25 mm, and no R corner was used.

In the present Example, the ratio B/A of the surface area B of the inner surface to the opening area A of the opening was 2.5. The maximum thickness of the molded article was 165 $\mu$m.

[Example 8]

The laminated film was prepared in the same manner as in Example 7 except that the same barrier film as that in Example 4 (PVDC film in which PE had been peeled off after the heat treatment of extrusion lamination) was used.

A molded article was obtained from the laminated film in the same manner as in Example 7 except for the following matters.

- A rectangular pallalelepiped metal mold with a frontage of 50 mm × 100 mm, a bottom of 50 mm × 100 mm, a depth of 50 mm, and no R corner was used.

In the present Example, the ratio B/A of the surface area B of the inner surface to the opening area A of the opening was 4. The maximum thickness of the molded article was 165 $\mu$m.

[Example 9]

The same barrier film (PVDC film with a thickness of 25 $\mu$m) as that in Example 1 was prepared. A laminated film (PVDC / PE) was prepared in the same manner as in Example 4 except that the PE resin layer was formed only on one side of the barrier film instead of forming the PE resin layers on both sides of the barrier film. It was confirmed that the width of the PVDC film was shrunk by 8% by the heat treatment of extrusion resin. The heat shrinkage (average in the MD and TD) of the PVDC film was 6%, and the dichroic ratio (average in the MD and TD) was 1.4. In addition, the PE layer was bonded onto one side of the PVDC film by extrusion lamination, then the bonded PE layer was peeled off, and the heat shrinkage of the PVDC single layer film was measured.

A laminated film prepared by an extrusion laminating method (PVDC / PE) and the same CPP film as that used in Example 7 were dry-laminated, as a result, a laminated film of CPP (50 $\mu$m) // PVDC (25 $\mu$m) / PE (30 $\mu$m) // CPP (50 $\mu$m) was obtained.

The laminated film was molded by a rectangular pallalelepiped metal mold with a frontage of 50 mm × 100 mm, a bottom of 50 mm × 100 mm, a depth of 50 mm, and no R corner in the same manner as in Example 7.

In the present Example, the ratio B/A of the surface area B of the inner surface to the opening area A of the opening was 4. The maximum thickness of the molded article was 165 $\mu$m.

[Example 10] (outside scope of invention)

As a barrier film, an ethylene vinyl alcohol-based resin film with a thickness of 15 $\mu$m (hereinafter, referred to as an "EVOH film". EVAL EF-XL manufactured by KURARAY CO., LTD.) was used. The melting point of the film, which was measured by a DSC (the temperature rise rate of 10°C/min.) was 180°C. The EVOH film was subjected to a heat treatment with a mirror surface roll heated to 160°C, and immediately after that, the EVOH film was subjected to a treatment in an equipment in which a cooling treatment can be performed with a mirror surface roll at 15°C. The heat shrinkage (average in the MD and TD) of the EVOH film after the treatment was 3%.

As the base materials bonding to the EVOH film, a CPP film and a PP film were used, and a laminated film of CPP (20 $\mu$m) // EVOH (15 $\mu$m) // CPP (20 $\mu$m) // PP sheet (280 $\mu$m) was obtained.

A molded article was obtained from the laminated film in the same manner as in Example 1 except for the following matters.

- A cylindrical metal mold with a frontage diameter of 100 mm, a bottom diameter of 100 mm, a depth of 100 mm, and no R corner was used.

In the present Example, the ratio B/A of the surface area B of the inner surface to the opening area A of the opening was 5. The maximum thickness of the molded article was 350 μm.

[Example 11] (outside scope of invention)

As a barrier film, an aromatic polyamide-based resin layer with a thickness of 18 μm (hereinafter, referred to as a "MX-Ny film". MXD6 manufactured by MITSUBISHI GAS CHEMICAL COMPANY, INC.) was used. The melting point of the film was 224°C. The melting point was measured by a DSC (the temperature rise rate of 10°C/min.) The MX-Ny film was subjected to a heat treatment with a mirror surface roll heated to 200°C, and immediately after that, the MX-Ny film was subjected to a cooling treatment with a mirror surface roll at 15°C. The heat shrinkage (average in the MD and TD) of the MX-Ny film after the treatment was 2%.

As the base materials bonding to the MX-Xy film, a CPP film and a PP film were used, and a laminated film of CPP (20 μm) // Mx-N (18 μm) // CPP (20 μm) // PP sheet (280 μm) was obtained.

A molded article was obtained from the laminated film in the same manner as in Example 1 except for the following matters.

- A cylindrical metal mold with a frontage diameter of 100 mm, a bottom diameter of 100 mm, a depth of 100 mm, and no R corner was used.

In the present Example, the ratio B/A of the surface area B of the inner surface to the opening area A of the opening was 5. The maximum thickness of the molded article was 350 μm.

[Comparative Example 3]

A PVDC film with a thickness of 25 μm (barrier film) was obtained by a non-stretched T-die casting method described in JP-A No. S62-285928. The resin constituting the film was a copolymer of vinylidene chloride with methyl acrylate, and the melting point measured with a DSC (the temperature rise rate of 10°C/min.) was 165°C. The heat shrinkage (average in the MD and TD) of the PVDC film was 0%, and the IR dichroic ratio (average in the MD and TD) was 1. Since the non-stretched PVDC single layer film was excessively brittle and the film cutting frequently occurred, the continuous dry laminate was impossible, therefore, the dry laminate was performed with a sheet sample.

As the base materials bonding to the PVDC film, a CPP film and a PP film were used, and a laminated film of CPP (20 μm) // PVDC (25 μm) // CPP (20 μm) // PP sheet (280 μm) was obtained.

A molded article was obtained from the laminated film in the same manner as in Example 1 except for the following matters.

- A cylindrical metal mold with a frontage diameter of 100 mm, a bottom diameter of 100 mm, a depth of 150 mm, and no R corner was used.

In the present Example, the ratio B/A of the surface area B of the inner surface to the opening area A of the opening was 7. As a result of the molding, parts where the PVDC layer was extremely thin were found, and it was confirmed that the PVDC film in which the IR dichroic ratio was 1 and completely no orientation was generated had poor moldability.

[Comparative Example 4]

The same barrier film (PVDC film) as that in Example 1 was subjected to a heat treatment in accordance with a method described in Japanese Patent No. 4889478. That is, a direct heating method with a roll at 130°C, and an indirect heating method at 150°C were used in combination for the film with a melting point of 165°C. It was confirmed that the width of the film was shrunk by 2% by the heat treatment. The heat shrinkage (average in the MD and TD) of the PVDC film was 1%, and the IR dichroic ratio (average in the MD and TD) was 1.9. In a case where the shrinkage was not almost allowed to occur at the time of the heat treatment, although the heat shrinkage was decreased, the IR dichroic ratio did not become smaller, and it was confirmed that the molecular orientation was not relaxed.

A molded article was obtained from the laminated film in the same manner as in Example 1 except for the following matters.

- A cylindrical metal mold with a frontage diameter of 100 mm, a bottom diameter of 100 mm, a depth of 100 mm, and no R corner was used.

In the present Example, the ratio B/A of the surface area B of the inner surface to the opening area A of the opening was 5. As a result of the molding, fracture was confirmed in the PVDC layer, and further it was confirmed that when the molecular orientation was insufficient, the moldability was poor.

[Comparative Example 5]

The same barrier film (PVDC film) as that in Example 1 was subjected to a heat treatment by using a tenter apparatus described in JP-A No. 2011-212983. That is, a PVDC film was fed out offline from the front of a tenter oven, and subjected to a heat treatment, then the film was wound up. The atmosphere temperature was set to 170°C, and the heat treatment was performed such that the width of the film was not changed before and after the heat treatment. The heat shrinkage (average in the MD and TD) of the PVDC film was 2%, and the IR dichroic ratio (average in the MD and TD) was 2.0. In a case where the shrinkage was not allowed to occur at the time of the heat treatment in the same manner as in Comparative Example 4, although the heat shrinkage was decreased after the treatment, the IR dichroic ratio was not reduced, and it was confirmed that the molecular orientation was not relaxed.
A molded article was obtained from the laminated film in the same manner as in Example 1 except for the following matters.

- A cylindrical metal mold with a frontage diameter of 100 mm, a bottom diameter of 100 mm, a depth of 100 mm, and no R corner was used.

In the present Example, the ratio B/A of the surface area B of the inner surface to the opening area A of the opening was 5. As a result of the molding, breakage was confirmed in the PVDC layer, and further it was confirmed that when the molecular orientation was not relaxed, the moldability was poor.
The conditions and results of Examples and Comparative Examples are shown in Tables 1 and 2.

[Table 1]

| | Constitution of laminated film | Surface area B / opening area A | Maximum thickness ($\mu$m) of molded article | $T_{MIN}/T_{MAX}$ |
|---|---|---|---|---|
| Example 1 | CPP (20 $\mu$m) // PVDC (25 $\mu$m) // CPP (20 $\mu$m) // PP (280 $\mu$m) | 3 | 360 | 0.40 |
| Example 2 | CPP (20 $\mu$m) // PVDC (15 $\mu$m) // CPP (20 $\mu$m) // PP (280 $\mu$m) | 5 | 350 | 0.32 |
| Example 3 | CPP (20 $\mu$m) // PVDC (15 $\mu$m) // CPS (20 $\mu$m) // PSP (2300 $\mu$m) | 7 | 2370 | 0.24 |
| Example 4 | PE (30 $\mu$m) / PVDC (25 $\mu$m) // PE (30 $\mu$m) // PP (280 $\mu$m) | 7 | 380 | 0.22 |
| Example 5 | CPP (20 $\mu$m) // PVDC (20 $\mu$m) // CPP (20 $\mu$m) // PP (280 $\mu$m) | 4 | 355 | 0.38 |
| Comparative Example 1 | PET (16 $\mu$m) // PVDC (25 $\mu$m) // CPP (20 $\mu$m) // PP (920 $\mu$m) | 3.4 | 1000 | 0.18 |
| Comparative Example 2 | PET (16 $\mu$m) // PVDC (25 $\mu$m) // CPP (20 $\mu$m) // PP (920 $\mu$m) | 5 | 1000 | Breakage of barrier layer |
| Example 6 | PET (16 $\mu$m) // PVDC (25 $\mu$m) // CPP (20 $\mu$m) // PP (920 $\mu$m) | 5 | 1000 | 0.33 |
| Example 7 | CPP (50 $\mu$m) // PVDC (25 $\mu$m) // CNy (30 $\mu$m) // CPP (50 $\mu$m) | 2.5 | 165 | 0.2 |
| Example 8 | CPP (50 $\mu$m) // PVDC (25 $\mu$m) // CNy (30 $\mu$m) // CPP (50 $\mu$m) | 4 | 165 | 0.15 |

(continued)

| | Constitution of laminated film | Surface area B / opening area A | Maximum thickness ($\mu$m) of molded article | $T_{MIN}/T_{MAX}$ |
|---|---|---|---|---|
| Example 9 | CPP (50 $\mu$m) // PVDC (25 $\mu$m) // PE (30 $\mu$m) // CPP (50 $\mu$m) | 4 | 165 | 0.15 |
| Example 10* | CPP (20 $\mu$m) // EVOH (15 $\mu$m) // CPP (20 $\mu$m) // PP (280 $\mu$m) | 5 | 350 | 0.22 |
| Example 11* | CPP (20 $\mu$m) // MX-Ny (18 $\mu$m) // CPP (20 $\mu$m) // PP (280 $\mu$m) | 5 | 350 | 0.21 |
| Comparative Example 3 | CPP (20 $\mu$m) // unstretched PVDC (25 $\mu$m) // CPP (20 $\mu$m) // PP (280 $\mu$m) | 7 | 360 | 0.09 |
| Comparative Example 4 | CPP (20 $\mu$m) // PVDC (25 $\mu$m) // CPP (20 $\mu$m) // PP (280 $\mu$m) | 5 | 360 | Breakage of barrier layer |
| Comparative Example 5 | CPP (20 $\mu$m) // PVOC (25 $\mu$m) // CPP (20 $\mu$m) // PP (285 $\mu$m) | 5 | 360 | Breakage of barrier layer |
| * = outside scope of invention | | | | |

[Table 2]

| | Heat shrinkage of barrier layer | Average value of dichroic ratio of MD to TD (orientation of barrier layer) | OTR |
|---|---|---|---|
| Example 1 | 10% | 1.7 | 15 |
| Example 2 | 5% | 1.4 | 19 |
| Example 3 | 3% | 1.3 | 20 |
| Example 4 | 3% | 1.2 | 18 |
| Example 5 | 13% | 1.7 | 500 |
| Comparative Example 1 | 26% | 2.2 | 16 |
| Comparative Example 2 | 26% | 2.2 | Impossible to measure for barrier layer rupture |
| Example 6 | 3% | 1.2 | 16 |
| Example 7 | 10% | 1.7 | 15 |
| Example 8 | 3% | 1.2 | 15 |
| Example 9 | 6% | 1.4 | 14 |
| Example 10* | 3% | - | 6 |
| Example 11* | 2% | - | 100 |
| Comparative Example 3 | 0% | 1.0 | 25 |
| Comparative Example 4 | 1% | 1.9 | Impossible to measure for barrier layer rupture |
| Comparative Example 5 | 2% | 2.0 | Impossible to measure for barrier layer rupture |
| * = outside scope of invention | | | |

**Industrial Applicability**

According to the present invention, a molded article having some depth, and having a sufficiently high barrier property is provided.

**Reference Signs List**

1:laminated film, 2:housing portion, 2a:opening, 2b:inner surface, 2c:bottom, 2d:side, 3:flange portion, 5:barrier layer, 10A, 10B: molded article

**Claims**

1.   A laminated film (1) for molding into a molded article (10A, 10B),
wherein the film has a barrier layer (5) which is a polyvinylidene chloride-based resin film, wherein the stretch ratio is 2 to 6 times in both of the machine direction (MD) and transverse direction (TD) at the time of forming the polyvinylidene chloride-based resin film,
wherein the barrier layer is obtained by heating the polyvinylidene chloride-based resin film to a temperature of $T_m$-30°C or more, wherein $T_m$ is the melting point of the resin constituting the barrier layer, such that the polyvinylidene chloride-based resin film is shrunk by 5 to 15% in the width direction, and immediately after the heat treatment, instantaneously cooling with a nip roll having a temperature of 30°C or less,
wherein the shrinkage rate is measured at a temperature of 120°C in the air atmosphere for a processing time of 5 minutes and both of the shrinkage rates in the MD and in the TD at 120°C in the barrier layer are 1% or more to 25% or less,
wherein both of the dichroic ratios in the MD and TD of the polyvinylidene chloride-based resin film are 1.2 to 1.8, and
wherein the thickness of the barrier layer in the laminated film is 10 to 100 $\mu$m.

2.   The laminate according to claim 1, wherein both of the shrinkage rates in the MD and in the TD at 120°C in the barrier layer are 1% or more to 5% or less.

3.   A molded article (10A, 10B) obtained by molding the laminate film of any one of claims 1 to 2, the molded article comprising:

an opening (2a) with an opening area A; and
an inner surface (2b) with a surface area B constituting a space for housing a content,
wherein a ratio B/A of the surface area B of the inner surface to the opening area A of the opening is 1.2 or more to 7 or less, and in a case where a maximum thickness of the molded article is 300 $\mu$m or more, a ratio $T_{MIN}/T_{MAX}$ of a minimum thickness $T_{MIN}$ to a maximum thickness $T_{MAX}$ of the barrier layer is 0.2 or more, and in a case where the maximum thickness of the molded article is less than 300 $\mu$m, a ratio $T_{MIN}/T_{MAX}$ of a minimum thickness $T_{MIN}$ to a maximum thickness $T_{MAX}$ of the barrier layer is 0.12 or more.

4.   The molded article according to claim 3, wherein the ratio B/A of the surface area B of the inner surface to the opening area A of the opening is 3.6 or more to 7 or less.

5.   The molded article according to claim 3 or claim 4, wherein in a case where the maximum thickness of the molded article is 300 $\mu$m or more, a ratio $T_{MIN}/T_{MAX}$ of a minimum thickness $T_{MIN}$ to a maximum thickness $T_{MAX}$ of the barrier layer is 0.2 or more to 0.5 or less, and
in a case where the maximum thickness of the molded article is less than 300 $\mu$m, a ratio $T_{MIN}/T_{MAX}$ of a minimum thickness $T_{MIN}$ to a maximum thickness $T_{MAX}$ of the barrier layer is 0.12 or more to 0.5 or less.

6.   A method for producing the molded article according to any one of claims 3 to 5, comprising the steps of:

forming a film which is a polyvinylidene chloride-based resin film, wherein the stretch ratio is 2 to 6 times in both of the machine direction (MD) and transverse direction (TD) at the time of forming the polyvinylidene chloride-based resin film,
performing a heat treatment at a temperature of Tm-30°C or more of the polyvinylidene chloride-based resin film to obtain a barrier layer (5), such that the polyvinylidene chloride-based resin film is shrunk by 5 to 15% in the width direction, wherein Tm°C is the melting point of the resin;

instantaneously cooling with a nip roll having a temperature of 30°C or less immediately after the heat treatment; wherein both of the dichroic ratios in the MD and TD of the polyvinylidene chloride-based resin film are 1.2 to 1.8, preparing a laminated film containing the film that has been subjected to the heat treatment as a barrier layer, wherein the thickness of the barrier layer in the laminated film is 10 to 100 $\mu$m, and wherein both of the shrinkage rates in the MD and in the TD at 120°C in the barrier layer are 1% or more to 25% or less, wherein the shrinkage rate is measured at a temperature of 120°C in the air atmosphere for a processing time of 5 minutes; and molding the laminated film into a molded article in which a ratio B/A of a surface area B of an inner surface to an opening area A of an opening is 1.2 or more to 7 or less, and in a case where a maximum thickness of the molded article is 300 $\mu$m or more, a ratio $T_{MIN}/T_{MAX}$ of a minimum thickness $T_{MIN}$ to a maximum thickness $T_{MAX}$ of the barrier layer is 0.2 or more, and in a case where a maximum thickness of the molded article is less than 300 $\mu$m, a ratio $T_{MIN}/T_{MAX}$ of a minimum thickness $T_{MIN}$ to a maximum thickness $T_{MAX}$ of the barrier layer is 0.12 or more.

7. The method for producing a molded article according to claim 6, wherein the performing of the heat treatment and the preparing of the laminated film are carried out by extrusion lamination.

**Patentansprüche**

1. Laminierter Film (1) zum Formen zu einem Formkörper (10A, 10B),
wobei der Film eine Sperrschicht (5) aufweist, die ein Harzfilm auf Polyvinylidenchloridbasis ist, wobei bei der Herstellung des Harzfilms auf Polyvinylidenchloridbasis das Streckverhältnis sowohl in der Maschinenrichtung (MD) als auch in der Querrichtung (TD) 2- bis 6-fach ist,
wobei die Sperrschicht durch Erhitzen des Harzfilms auf Polyvinylidenchloridbasis auf eine Temperatur von $T_m$ - 30 °C oder mehr, wobei $T_m$ der Schmelzpunkt des Harzes ist, das die Sperrschicht bildet, so dass der Harzfilm auf Polyvinylidenchloridbasis in der Breitenrichtung um 5 bis 15 % schrumpft, und sofort nach der Wärmebehandlung unverzügliches Abkühlen mit einem Walzenspalt mit einer Temperatur von 30 °C oder weniger erhalten wird,
wobei die Schrumpfungsrate bei einer Temperatur von 120 °C an Luftatmosphäre für eine Verarbeitungszeit von 5 Minuten gemessen wird und die Schrumpfungsraten in der Sperrschicht bei 120 °C sowohl in der MD als auch in der TD 1 % oder mehr bis 25 % oder weniger betragen,
wobei die dichroitischen Verhältnisse sowohl in der MD als auch in der TD des Harzfilms auf Polyvinylidenchloridbasis 1,2 bis 1,8 betragen und
wobei die Dicke der Sperrschicht in dem laminierten Film 10 bis 100 $\mu$m beträgt.

2. Laminat gemäß Anspruch 1, wobei die Schrumpfungsraten in der Sperrschicht bei 120 °C sowohl in der MD als auch in der TD 1 % oder mehr bis 5 % oder weniger betragen.

3. Formkörper (10A, 10B), erhalten durch Formen des Laminatfilms gemäß einem der Ansprüche 1 bis 2,
wobei der Formkörper umfasst:

eine Öffnung (2a) mit einer Öffnungsfläche A; und
eine Innenoberfläche (2b) mit einer Oberfläche B, die einen Raum zum Aufnehmen eines Inhalts bildet,
wobei ein Verhältnis B/A der Oberfläche B der Innenoberfläche zu der Öffnungsfläche A der Öffnung 1,2 oder mehr bis 7 oder weniger beträgt, und falls die größte Dicke des Formkörpers 300 $\mu$m oder mehr beträgt, ein Verhältnis $T_{MIN}/T_{MAX}$ einer kleinsten Dicke $T_{MIN}$ zu einer größten Dicke $T_{MAX}$ der Sperrschicht 0,2 oder mehr beträgt, und falls die größte Dicke des Formkörpers weniger als 300 $\mu$m beträgt, ein Verhältnis $T_{MIN}/T_{MAX}$ einer kleinsten Dicke $T_{MIN}$ zu einer größten Dicke $T_{MAX}$ der Sperrschicht 0,12 oder mehr beträgt.

4. Formkörper gemäß Anspruch 3, wobei das Verhältnis B/A der Oberfläche B der Innenoberfläche zu der Öffnungsfläche A der Öffnung 3,6 oder mehr bis 7 oder weniger beträgt.

5. Formkörper gemäß Anspruch 3 oder Anspruch 4, wobei, falls die größte Dicke des Formkörpers 300 $\mu$m oder mehr beträgt, ein Verhältnis $T_{MIN}/T_{MAX}$ einer kleinsten Dicke $T_{MIN}$ zu einer größten Dicke $T_{MAX}$ der Sperrschicht 0,2 oder mehr bis 0,5 oder weniger beträgt und
falls die größte Dicke des Formkörpers weniger als 300 $\mu$m beträgt, ein Verhältnis $T_{MIN}/T_{MAX}$ einer kleinsten Dicke $T_{MIN}$ zu einer größten Dicke $T_{MAX}$ der Sperrschicht 0,12 oder mehr bis 0,5 oder weniger beträgt.

6. Verfahren zum Herstellen des Formkörpers gemäß einem der Ansprüche 3 bis 5, umfassend die Schritte:

Bilden eines Films, der ein Harzfilm auf Polyvinylidenchloridbasis ist, wobei bei der Herstellung des Harzfilms auf Polyvinylidenchloridbasis das Streckverhältnis sowohl in der Maschinenrichtung (MD) als auch in der Querrichtung (TD) 2- bis 6-fach ist,

Durchführen einer Wärmebehandlung des Harzfilms auf Polyvinylidenchloridbasis bei einer Temperatur von $T_m$ - 30 °C oder mehr, um eine Sperrschicht (5) zu erhalten, so dass der Harzfilm auf Polyvinylidenchloridbasis in der Breitenrichtung um 5 bis 15 % schrumpft, wobei $T_m$ °C der Schmelzpunkt des Harzes ist;

sofort nach der Wärmebehandlung unverzügliches Abkühlen mit einem Walzenspalt mit einer Temperatur von 30 °C oder weniger;

wobei die dichroitischen Verhältnisse sowohl in der MD als auch in der TD des Harzfilms auf Polyvinylidenchloridbasis 1,2 bis 1,8 betragen,

Herstellen eines laminierten Films, der den Film enthält, der der Wärmebehandlung als Sperrschicht unterzogen worden ist, wobei die Dicke der Sperrschicht in dem laminierten Film 10 bis 100 µm beträgt und die Schrumpfungsraten in der Sperrschicht bei 120 °C sowohl in der MD als auch in der TD 1 % oder mehr bis 25 % oder weniger betragen, wobei die Schrumpfungsrate bei einer Temperatur von 120 °C an Luftatmosphäre für eine Verarbeitungszeit von 5 Minuten gemessen wird; und

Formen des laminierten Films zu einem Formkörper, wobei ein Verhältnis B/A einer Oberfläche B einer Innenoberfläche zu einer Öffnungsfläche A einer Öffnung 1,2 oder mehr bis 7 oder weniger beträgt, und falls die größte Dicke des Formkörpers 300 µm oder mehr beträgt, ein Verhältnis $T_{MIN}/T_{MAX}$ einer kleinsten Dicke $T_{MIN}$ zu einer größten Dicke $T_{MAX}$ der Sperrschicht 0,2 oder mehr beträgt, und falls die größte Dicke des Formkörpers weniger als 300 µm beträgt, ein Verhältnis $T_{MIN}/T_{MAX}$ einer kleinsten Dicke $T_{MIN}$ zu einer größten Dicke $T_{MAX}$ der Sperrschicht 0,12 oder mehr beträgt.

**7.** Verfahren zum Herstellen eines Formkörpers gemäß Anspruch 6, wobei das Durchführen der Wärmebehandlung und das Herstellen des laminierten Films durch Extrusionslamination durchgeführt werden.

## Revendications

**1.** Film stratifié (1) destiné à un moulage pour produire un article moulé (10A, 10B),

le film comportant une couche barrière (5) qui est un film de résine à base de chlorure de polyvinylidène, le rapport d'étirage étant de 2 à 6 fois dans le sens machine (SM) ainsi que dans le sens travers (ST) au moment de la formation du film de résine à base de chlorure de polyvinylidène,

dans lequel la couche barrière est obtenue en chauffant le film de résine à base de chlorure de polyvinylidène à une température de $T_m$-30 °C ou plus,

dans lequel $T_m$ est le point de fusion de la résine constituant la couche barrière, de telle sorte que le film de résine à base de chlorure de polyvinylidène subisse un retrait de 5 à 15 % dans le sens de la largeur, et immédiatement après le traitement thermique, un refroidissement instantané avec un rouleau pinceur ayant une température de 30 °C ou moins,

dans lequel le taux de retrait est mesuré à une température de 120 °C dans l'atmosphère d'air pendant un temps de traitement de 5 minutes et les taux de retrait dans le SM ainsi que dans le ST à 120 °C dans la couche barrière sont de 1 % ou plus à 25 % ou moins,

dans lequel les rapports dichroïques dans le SM ainsi que dans le ST du film de résine à base de chlorure de polyvinylidène sont de 1,2 à 1,8, et dans lequel l'épaisseur de la couche barrière dans le film stratifié est de 10 à 100 µm.

**2.** Stratifié selon la revendication 1, dans lequel les taux de retrait dans le SM ainsi que dans le ST à 120 °C dans la couche barrière sont de 1 % ou plus à 5 % ou moins.

**3.** Article moulé (10A, 10B) obtenu par moulage du film stratifié selon l'une quelconque des revendications 1 à 2, l'article moulé comprenant :

une ouverture (2a) ayant une aire d'ouverture A ; et
une surface interne (2b) ayant une aire de surface B formant un espace pour héberger un contenu,
dans lequel un rapport B/A de l'aire de surface B de la surface interne contre l'aire d'ouverture A de l'ouverture est de 1,2 ou plus à 7 ou moins, et dans un cas où une épaisseur maximum de l'article moulé est de 300 µm ou plus, un rapport $T_{MIN}/T_{MAX}$ d'une épaisseur minimum $T_{MIN}$ contre une épaisseur maximum $T_{MAX}$ de la couche barrière est de 0,2 ou plus, et dans un cas où l'épaisseur maximum de l'article moulé est inférieure à 300 µm, un rapport $T_{MIN}/T_{MAX}$ d'une épaisseur minimum $T_{MIN}$ contre une épaisseur maximum $T_{MAX}$ de la couche barrière est de 0,12 ou plus.

4. Article moulé selon la revendication 3, dans lequel le rapport B/A de l'aire de surface B de la surface interne contre l'aire d'ouverture A de l'ouverture est de 3,6 ou plus à 7 ou moins.

5. Article moulé selon la revendication 3 ou la revendication 4, dans lequel dans un cas où l'épaisseur maximum de l'article moulé est de 300 $\mu$m ou plus, un rapport $T_{MIN}/T_{MAX}$ d'une épaisseur minimum $T_{MIN}$ contre une épaisseur maximum $T_{MAX}$ de la couche barrière est de 0,2 ou plus à 0,5 ou moins, et dans un cas où l'épaisseur maximum de l'article moulé est inférieure à 300 $\mu$m, un rapport $T_{MIN}/T_{MAX}$ d'une épaisseur minimum $T_{MIN}$ contre une épaisseur maximum $T_{MAX}$ de la couche barrière est de 0,12 ou plus à 0,5 ou moins.

6. Procédé de fabrication de l'article moulé selon l'une quelconque des revendications 3 à 5, comprenant les étapes qui consistent à :

former un film qui est un film de résine à base de chlorure de polyvinylidène, le rapport d'étirage étant de 2 à 6 fois dans le sens machine (SM) ainsi que dans le sens travers (ST) au moment de la formation du film de résine à base de chlorure de polyvinylidène,
réaliser un traitement thermique à une température de $T_m$-30 °C ou plus du film de résine à base de chlorure de polyvinylidène pour obtenir une couche barrière (5), de telle sorte que le film de résine à base de chlorure de polyvinylidène subisse un retrait de 5 à 15 % dans le sens de la largeur, $T_m$ °C étant le point de fusion de la résine ;
effectuer un refroidissement instantané avec un rouleau pinceur ayant une température de 30 °C ou moins immédiatement après le traitement thermique ;
dans lequel les rapports dichroïques dans le SM ainsi que dans le ST du film de résine à base de chlorure de polyvinylidène sont de 1,2 à 1,8,
préparer un film stratifié contenant le film qui a été soumis au traitement thermique comme couche barrière, l'épaisseur de la couche barrière dans le film stratifié étant de 10 à 100 $\mu$m, et les taux de retrait dans le SM ainsi que dans le ST à 120 °C dans la couche barrière étant de 1 % ou plus à 25 % ou moins, le taux de retrait étant mesuré à une température de 120 °C dans l'atmosphère d'air pendant un temps de traitement de 5 minutes ; et
mouler le film stratifié pour en faire un article moulé dans lequel un rapport B/A d'une aire de surface B d'une surface interne contre une aire d'ouverture A d'une ouverture est de 1,2 ou plus à 7 ou moins, et dans un cas où une épaisseur maximum de l'article moulé est de 300 $\mu$m ou plus, un rapport $T_{MIN}/T_{MAX}$ d'une épaisseur minimum $T_{MIN}$ contre une épaisseur maximum $T_{MAX}$ de la couche barrière est de 0,2 ou plus, et dans un cas où une épaisseur maximum de l'article moulé est inférieure à 300 $\mu$m, un rapport $T_{MIN}/T_{MAX}$ d'une épaisseur minimum $T_{MIN}$ contre une épaisseur maximum $T_{MAX}$ de la couche barrière est de 0,12 ou plus.

7. Procédé de fabrication d'un article moulé selon la revendication 6, dans lequel la réalisation du traitement thermique et la préparation du film stratifié sont effectués en utilisant un procédé de stratification par extrusion.

## Fig.1

EP 2 902 192 B1

Fig.2

*Fig.3*

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3244537 A
- JP S62285928 A
- JP 4889478 B
- JP 2011212983 A
- JP 2010070217 A
- JP 2013180778 A
- US 2006246242 A
- EP 2865522 A1